# EUROPEAN PATENT APPLICATION

(11) **EP 3 882 070 A2**
(43) Date of publication of application: **22.09.2021**
(21) Application number: 21397504.8
(22) Date of filing: 19.03.2021
(51) Int. Cl.: B60L 53/53, B60L 53/63, B60L 53/67

(54) **ARRANGEMENT FOR CHARGING THE BATTERIES OF ELECTRICALLY DRIVEN VEHICLES**

(30) Priority: 20.03.2020 FI 20205287
(71) Applicant: Keksari OY, 05830 Hyvinkää (FI)
(72) Inventor: HÄNNINEN, Ari, 05830 HYVINKÄÄ (FI)
(74) Representative: Salomäki, Juha Kari Ensio

(57) **Abstract**

The invention relates to an arrangement for charging the batteries of electrically driven vehicles (5), the arrangement including one or more charging units (6) connected to an electrical grid (2), the charging unit (6) comprising one or more chargers (4) to which the vehicle (5), such as bus, to be charged can be connected to charge the batteries of the vehicle (5). The charging unit (6) comprises a battery pack (7) placed between the electrical grid (2) and the chargers (4).

## Description

### FIELD OF THE INVENTION

The invention relates to an arrangement for charging the batteries of electrically driven vehicles as defined in the preamble of claim 1.

### BACKGROUND OF THE INVENTION

There are many ways for charging the batteries of electrically driven vehicles, such a buses. The prior-art solutions employ, among other things, a direct charging solution where the battery, or the battery pack, of a bus, hereafter briefly referred to as "the battery", is large enough for a full-day drive and is charged directly from an electrical grid, in the night time when the price of electricity is low and the bus is parked at a bus depot. The battery of these buses is large in size and heavy, causing a lower transport capacity but a higher consumption of energy. This direct charging solution involves a high total charging power when hundreds of buses are charged during a few nighttime hours. In the worst case, this solution may have an adverse effect on the equilibrium between consumption and production in the electrical grid.

In another direct charging solution, the battery of the bus is smaller and charged, during the day, at final stops and along the bus route. In this case, the total charging power needed by the buses, being distributed over a longer period, is not so high all the time, and neither does it have an adverse effect on the operation of the electrical grid, but, now, the charging takes place in the daytime when the price of electricity usually is high. However, as the batteries of the buses are charged according to route timetables, there can be a considerably great need of charging power, temporarily for a few minutes.

With the electrification of traffic, the slow charging of the batteries of vehicles has become a bottleneck, in addition to their low capacity. The faster the batteries are charged, the higher is the current. A possible electrical grid problem is emerging, as an increasing number of vehicles are directly charged from the electrical grid, at the same time. Concurrently, the production of electricity is transitioning to renewables which do not always produce energy regularly and which cannot be controlled as required. The increasing renewables, such as wind, wave and solar energy, require, as such, more regulating power to allow all of their energy to be utilized.

The batteries of electrically driven buses not only have a relatively high capacity but also a high charging current and charging power. Charging hundreds of buses at the same time requires a huge charging power and, even if carried out in the nighttime when the consumption of power for other purposes is low, may have an adverse effect on the electrical grid. In an electrical grid, there must be a constant equilibrium between consumption and production, or the distribution of electricity is disturbed. The equilibrium between consumption and production is controlled by frequency regulation and power regulation of the electrical grid. The regulating power used for this purpose consists of, among other things, hydropower, gas turbine power plants and imported electricity.

A prior-art problem is how to optimize the battery size, battery price, charging power and time of charging. A high charging power is needed if the batteries of hundreds of buses are charged at the same time, resulting in an adverse effect on the operation of the electrical grid, as already mentioned above. By implementing an electric bus charging system in an incorrect way, the stability of the electrical grid is compromised. If hundreds of buses are charged at the wrong time of the day, the load on the electric becomes huge and an increase in the production peak of the grid is inevitably required.

The increasing use of renewables in the production of energy also compromises the stability of the electrical grid. Windmills and electric traffic increase the need for regulation, due to their irregular production and high consumption of electricity, respectively. Therefore, more and more regulating power is needed to maintain the equilibrium between the consumption and production of electricity.

Another prior-art problem is that the batteries of buses are usually replaced when their remaining capacity is approximately 80 %. If it is desirable to still utilize these discharged batteries, an augment of 25 % is needed for the batteries to restore their initial 100 % capacity. This increases the weight of the transported mass and, consequently, reduces the energy efficiency of the bus. The solution according to the invention, instead, allows batteries to be used in the battery packs of the charging units at the charging stations where an increased weight does not cause problems. The only thing needed is a little more space.

### OBJECTIVE OF THE INVENTION

An objective of the invention is to enable the batteries of vehicles, and especially buses, to be charged faster and to enable this fast charging to be carried out without causing a huge load on the electrical grid. This is achieved by charging the batteries of a charging unit at a charging station prior to actual charging of the batteries of the bus. A high power load on the electrical grid is avoided by getting some of the charging current used for the charging of the battery of the bus not only from the electrical grid but also from the batteries of the charging unit. This arrangement causes a smaller load on the electrical grid, but for a longer time, to keep the load power of the electrical grid at lower level than during direct charging.

An objective of the invention is to provide a vehicle charging arrangement allowing for not only charging vehicles but also for participating in the grid frequency regulation market. Thus, the arrangement can be used, when necessary, for regulating the electrical grid down or up to an extent corresponding to the free capacity of the batteries of the charging units. The batteries of the charging units are discharged or charged by the needs of the electrical grid. This affects the price of electricity in the electrical grid. A big city may have hundreds of charging units, all of them being controlled by the same central control system. A whole like this corresponds, in magnitude, to a small power plant, although the full power obtained from the system is substantially momentary.

Still another objective of the invention is provide a vehicle charging arrangement allowing batteries used by vehicles, especially buses, and no longer suitable for daily use in the vehicles, to be re-used in the vehicle charging units.

The arrangement according to the invention is characterized in what is set forth in the characterizing part of claim 1. Other embodiments of the invention are characterized in what is set forth in the rest of the claims.

### BRIEF DESCRIPTION OF THE INVENTION

To achieve the objective of the invention, the invention comprises an arrangement for charging the batteries of electrically driven vehicles, such as buses, the arrangement comprising one or more charging units connected to an electrical grid, the charging unit comprising one or more chargers to which a vehicle to be charged, such as a bus, can be connected to charge the batteries of the vehicle. Preferably, the charging unit comprises a battery pack placed between the electrical grid and the chargers.

### ADVANTAGES OF THE INVENTION

The solution according to the invention is suitable for charging electrically driven vehicles and allows for a very quick charge. Thus, the solution according to the invention is especially suitable for use in regular traffic, such as for charging buses. The charging unit provided with the battery pack allows buses, among other things, to be charged with a higher power than directly from the grid, through a so-called secondary substation, for example. This of importance when, for example, there is a transformer between the electrical grid and the chargers, having a limited capacity, just like most of the so-called secondary substations do.

Another advantage is that the solution according to the invention can be used, at the same time, to provide regulating power for the electrical grid to even out variations between consumption and production in the electrical grid.

Another advantage is the lower load power of the main grid and the possibility to charge the batteries of the charging unit exactly when convenient. As the batteries of the charging unit even out the power peaks, there are no consumption peaks in the electrical grid.

With the price of electricity varying by day and hour, depending on the current equilibrium between consumption and production, another advantage is that the arrangement according to the invention enables electricity to be stored in batteries, when it is inexpensive, and to be discharged when it is expensive, or, when the production of electricity is too low to cover the consumption.

Still another advantage is that the solution according to the invention can even be used to provide regulating power to fill a lack of regulating power caused by renewables.

Still another advantage is that batteries used by vehicles and no longer suitable for daily use in the vehicles can be re-used in the charging units at the vehicle charging stations. Thus, the invention makes it possible to utilize used bus batteries, for example, in the battery packs of the charging units. This allows the battery pack to have an energy capacity which is considerably higher than the battery recharge need of the vehicles being charged at the same time. Thus, the power-to-energy ratio, i.e. the P/E ratio, is low, allowing the batteries of the battery pack, as they are not subjected to too much strain, to have a longer lifespan. Consequently, used bus batteries, for example, can also be utilized in the battery packs of the charging units, with a long lifespan.

Still another advantage is that, compared to the known direct charging solution, the solution according to the invention avoids disturbances, and, at the same time, a potential disturbing actor on the electrical grid becomes actor supporting the electrical grid.

Still another advantage is that the arrangement can also operate as a reserve power plant to supply electric energy from the battery pack of the charging unit to any place where reserve power is needed.

### LIST OF FIGURES

In the following, the invention will be explained in more detail by means of exemplifying embodiments, with reference to the accompanying simplified and schematic drawings where
- Figure 1: is a simplified and schematic view of a prior-art solution,
- Figure 2: is a simplified and schematic view of a solution according to the invention,
- Figure 3: is a simplified and schematic view of another solution according to the invention,
- Figure 4: is a simplified and schematic view of a solution according to the invention for how to logically divide the battery pack of the charging unit into different operations, and
- Figure 5: is a simplified and schematic view of an example of data traffic allowing, in the arrangement according to the invention, the energy capacity of the charging units to be dynamically changed for the needs of the vehicles and the electrical grid.

### DETAILED DESCRIPTION OF THE INVENTION

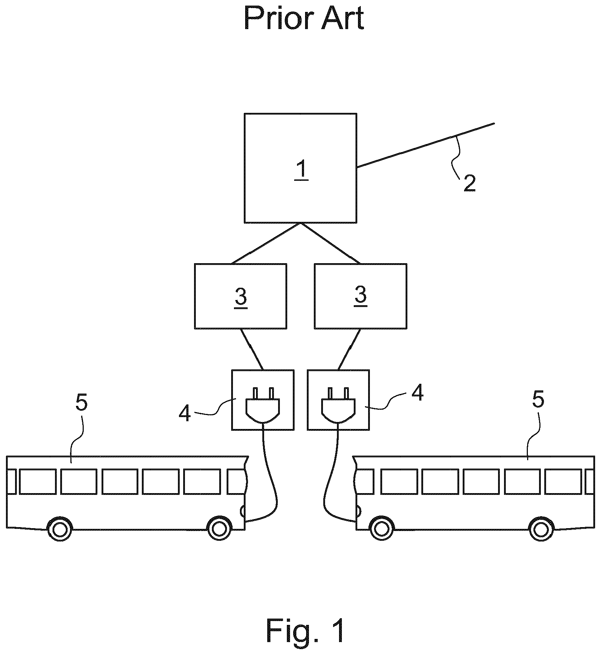

Figure 1 is a simplified and schematic view of a prior-art solution where no battery pack is used as an intermediate storage in a bus charging apparatus. The solution includes a transformer 1 connected to a 20 kV electrical grid 2, for example. Further, an electronic unit 3, such as an inverter or a similar device, is connected to the transformer 1 to transform the electric energy provided by the transformer 1 to be suitable for charging the batteries of the buses 5. Each bus 5 is connected to the electronic unit 3 by a charger 4. The drawback of this solution are the above-mentioned problems.

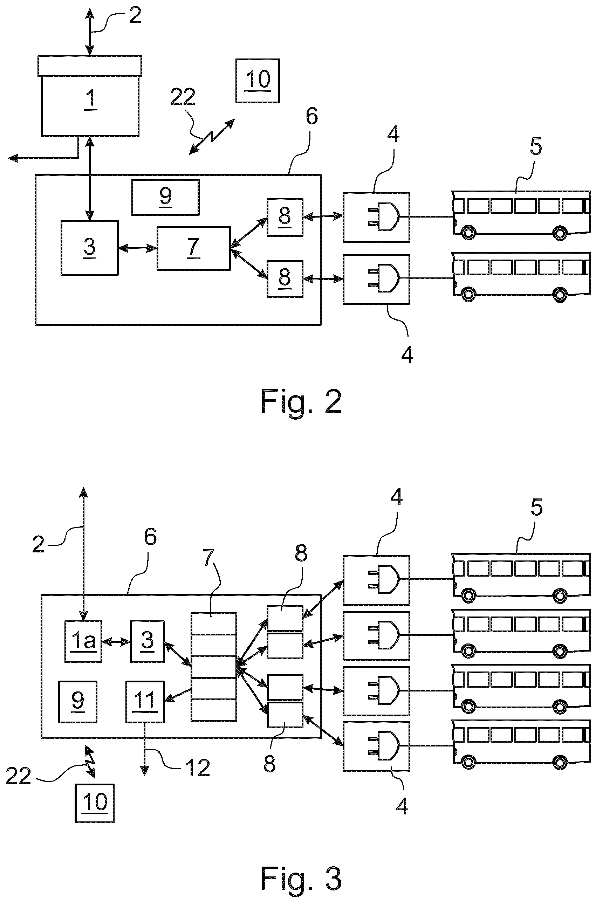

Figure 2 is a simplified and schematic view of a solution according to the invention where a charging unit 6 of a charging station does not charge the batteries of the vehicles 5, such as buses, directly from an electrical grid 2. In the solution according to the invention, the charging unit 6 comprises an electronic unit 3, a battery pack 7 consisting of several cells or batteries, one or more second electronic units 8 and one or more chargers 4 to charge the batteries of the vehicles 5, such as buses.

The charging unit 6 is connected to the electrical grid 2, which can be a 20 kV electrical grid, for example, by a transformer 1. The transformer 1 can be a so-called secondary substation, for example, supplying electric energy to other users as well. The electronic unit 3 of the charging unit 6, preferably comprising an inverter, is connected to the transformer 1 in such a way that it is able to receive the electric energy supplied by the transformer 1 and, preferably, to also feed the electric energy stored in the battery pack 7 of the charging unit 6 back to the transformer 1 and to the electrical grid 2 therethrough. Thus, the electronic unit 3 is preferably bidirectional. The electronic unit 3 is electrically connected to the battery pack 7 and adapted to transform the electric energy received from the transformer into electric energy suitable for charging the batteries and/or cells of the battery pack 7. When the transformer 1 is configured to enable the electric energy to be supplied to the electrical grid 2 therethrough, it is preferable that the electronic unit 3 is adapted to also transform the electric energy received from the battery pack 7 into a form allowing it to be supplied to the electrical grid 2.

Preferably, the battery pack 7 consists of a relatively low voltage cells some of which are connected in series to provide a necessary voltage while others of them are connected in parallel to provide a necessary current. Preferably, the battery pack 7 may also include batteries removed, after being used, from buses or other vehicles, for example, and having a remaining capacity of approximately 80 %. These batteries can still be utilized in the battery packs 7 of the charging units 6 and can be added to the charging units 6, as suitably sized packages, for example, allowing the capacity of the charging units 6 to be increased in an environmentally friendly manner. Thus, the charging unit 6 is preferably modular and its capacity can be increased according to the modular principle, to increase either the vehicle battery charging capacity or the grid regulating power capacity.

A necessary number of chargers 4 are connected to the charging unit 6. In addition, the charging unit 6 has one electronic unit 8 for each charger 4. The electronic unit 8, which preferably comprises an inverter, is electrically connected to the battery pack 7 and adapted to transform the electric energy obtained from the battery pack 7 into a form suitable for charging the batteries of the vehicles 5, such as buses. The chargers 4 can be constituted by different prior-art solutions, such as pantographs, induction chargers etc.

Preferably, the arrangement also comprises, in the charging unit 6, a control unit 9 having a control system and connected, by a data connection 22, to a central control system 10 adapted to control one or more charging units 6. The central control system 10 is also connected to one or more grid operators, or system administrators, of the electrical grid 2 as well as to operators whose vehicles 5 charge their batteries from the charging units 6. These operators include, among other things, bus companies and local traffic organizations. Thus, it is possible to inform the charging unit 6 of the arrival of any of the buses in advance, through the central control system 10, allowing the charging unit 6 prepare for the arrival of the bus. The central control system 10 can also be connected to operators preparing and communicating weather forecasts. Herein, all the organizations, institutions, units and apparatuses connected to the central control unit 10 and providing it with data and getting data therefrom can briefly be referred to as "operators".

Figure 3 is a simplified and schematic view of another solution according to the invention where the charging unit 6 of the charging station does not charge the batteries of the vehicles 5, such as buses, directly from the electrical grid 2. This solution is principally identical to the solution shown in figure 2 and the actuators, such as the electronic units 3 and 8, the battery pack 7 and the control unit 9 included therein are substantially the same, but it is more high-powered, for example, and comprises a few additional components, in comparison to the solution shown in figure 2. This solution has, among other things, its own high-power transformer 1a forming part of the charging unit 6, eliminating the need of a separate external transformer between the electrical grid 2 and the charging unit 6. The charging unit's 6 own transformer 1a is bidirectional and directly connected to a 20 kV electrical grid 2, for example, the transformer 1a being able to also supply electric energy obtained from the battery pack to the electrical grid 2. The transformer 1a is electrically connected to the electronic unit 3 which, in turn, is electrically connected to the battery pack 7, which, in turn, is electrically connected to the electronic units 8, which, in turn, are electrically connected to the chargers 4.

Preferably, this solution also has a control unit 9 provided with a control system and connected to a central control system 10 adapted to control one or more charging units 6 which can be solutions according to figure 2 or figure 3, or other different solutions. The central control system 10 is also connected to the grid operator or system administrator of the electrical grid 2, as well as to operators whose vehicles 5 charge their batteries from the charging units 6. Thus, it is possible to inform the charging unit 6 of the arrival of any of the buses in advance, through the central control system 10, allowing the charging unit 6 prepare for the arrival of the bus.

Preferably, the charging unit 6 also includes at least one electronic unit 11 provided with an inverter to supply reserve power from the battery pack 7 to an external operator. The electronic unit 11 is electrically connected to the battery pack 7. The solution shown in figure 2 can also have a similar electronic unit to supply reserve power from the battery pack 7 to an external operator.

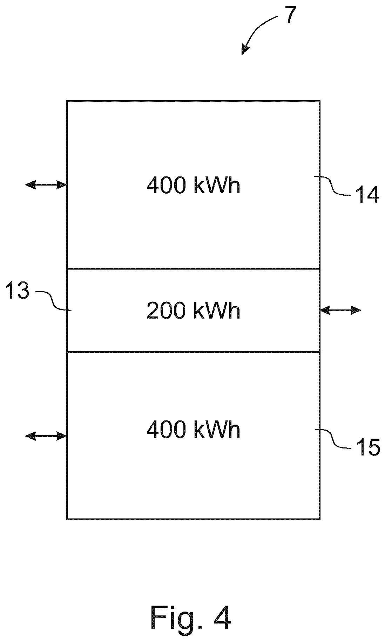

Figure 4 is a simplified and schematic view of a solution according to the invention for how to logically divide the battery pack 7 of the charging unit 6 into different operations. As an example, the 1000 kV battery pack 7 can be physically unitary but, preferably, it is logically divided into different operations, similarly to the example shown in figure 4 where the battery pack 7 is divided into three logical battery modules 13 to 15, each of them having a different purpose. This logical division ensures that a sufficient amount of energy is available for each functionality supported by the battery pack 7. The logical battery module 13 is adapted to provide the batteries of the vehicles 5 with charging current. In the solution according to this example, an energy capacity of 200 kWh, i.e. 1/5 of the total energy capacity of the entire battery pack, is reserved for this.

Sometimes, the electrical grid 2 needs down-regulation, i.e. an increase of consumption. The logical battery module 14 of the battery pack 7 is allocated for down-regulation of the electrical grid 2. In the solution according to this example, an energy capacity of 400 kWh, i.e. 2/5 of the total energy capacity of the entire battery pack 7, is reserved for this. Therefore, in a down-regulation situation, it is possible to charge the battery pack 7 with 400 kWh of electric energy, thus increasing the consumption in the electrical grid 2.

Sometimes, instead, the electrical grid 2 needs up-regulation, i.e. a decrease of consumption or an increase of production. The logical battery module 15 of the battery pack 7 allocated for up-regulation of the electrical grid 2. In the solution according to this example, an energy capacity of 400 kWh, i.e. 2/5 of the total energy capacity of the entire battery pack 7, is reserved for this. Therefore, the battery pack 7 always has a reserve of 400 kWh to be supplied as electric energy, in an up-regulation situation, to the electrical grid 2 where it is seen as increased production of electric energy.

In the arrangement according to the invention, the charging units 6 are preferably provided with unitary battery packs 7 dimensioned in such a way that the battery pack 7 only energywise has an oversized capacity, i.e. an oversized energy capacity, with respect to the charging need of the batteries of the vehicles 5. Preferably, the charging unit 6 has a 1000 kWh battery pack 7 which, in terms of power, is a single physical unit. However, only a portion of the battery pack 7 is allocated for charging the batteries of the vehicles 5, such 1/5 or 200 kWh of the capacity, for example. The rest of the capacity of the battery pack 7, 800 kWh i.e. 4/5, for example, is allocated for regulating the electrical grid 2, as mentioned above. This makes the energy capacity of the battery pack 7 fivefold with respect to the energy capacity allocated for charging the batteries of the vehicles 5. Therefore, the energy capacity of the battery pack 7 is considerably higher than the energy needed for charging the batteries of the vehicles 5 arriving at the charging unit 6 and simultaneously charged thereat. As an example, the energy capacity of the battery pack 7 is at least two times higher, suitably at least approximately 3 times higher, more suitably at least approximately 4 times higher and preferably at least approximately 5 times higher than the energy needed for charging the batteries of the vehicles 5 arriving at the charging unit 6 and simultaneously charged thereat.

Preferably, the charging units 6 are designed and dimensioned to simultaneously charge the batteries of a maximum of six electric buses, for example, the number of buses being restricted by only providing the charging unit 6 with six charging points, i.e. chargers 4. Typically, the batteries of an electric bus have a 250 kW charging power per bus, for example. This results in a maximum simultaneous charging power of 1500 kWh from the battery pack 7 to the six buses. The charging period of the batteries of an electric bus typically only being approximately 5 minutes, the charging energy needed for the simultaneous charging of the batteries of the six buses is 5/60*1500 = 125 kWh, only covering 12,5 % of the battery pack 7 of the above-mentioned 1000 kWh charging unit 6. Thus, in this case, the energy capacity of the battery pack 7 is 1000/125 = 8-fold in comparison to the maximum charging need of the electric buses simultaneously charged at the charging unit 6.

In the example above, the Power-to-Energy-ratio, i.e. the P/E ratio, is 1500/1000 = 1.5. Even if six buses having a double battery charging power with respect to the example above, i.e. 500 kW per bus, are simultaneously charged at the same charging unit 6, resulting in a simultaneous charging power of 3000 kW taken from the battery pack 7, there is no problem because the charging unit 6 can easily carry out the charging, the P/E ratio still being low enough. The P/E ratio would be 3000/1000=3.

### Example:

Six buses are being charged at the same time, for example. Thus, the charging power from the battery pack 7 to the batteries of the buses is 6*250 kW, i.e. 1500 kW. If the charging unit only has a battery pack of 200 kWh, the Power-to-Energy-ratio, i.e. the P/E ratio is 7.5. This ratio is too high for the life of inexpensive batteries.

When these 1500 kW are taken from the oversized battery pack 7 of the arrangement according to the invention, such as from a 1000 kWh battery pack, the P/E ratio is only 1.5. However, in this case, the total energy taken from the battery pack 7 during a charging period of 5 minutes is 1500 kWh * 5/60 h = 125 kWh, i.e. a reservation of 200 kWh in the 1000 kWh battery pack is well sufficient for simultaneously charging the batteries of all the six buses.

It is impossible to take 1500 kW directly from an electrical grid through a conventional secondary substation. An advantage of the battery pack 7 having an oversized energy capacity is that the lifespan of the batteries is significantly longer because they are not subjected to an excessive strain, i.e. the P/E ratio is low. The low P/E ratio also allows used batteries to be utilized as the batteries of the charging unit 6. The P/E ratio of the battery pack 7 according to the invention can be lower than 5, for example, it is suitably lower than 3, preferably lower than 2 and as low as approximately 1.5, for example, or even lower.

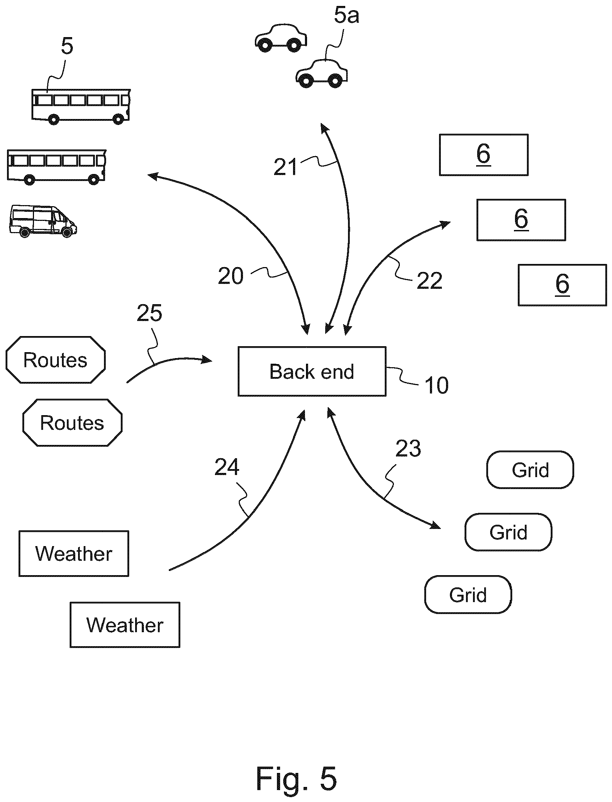

Figure 5 is a simplified and schematic view of an example of data traffic allowing for, in the arrangement according to the invention, a dynamic real-time change of the energy capacity of the charging units 6, to meet the needs of the vehicles even the electrical grid, and, even for preparing for actions which, in the light of prognoses, are to be expected in the future.

In the arrangement according to the invention, the entity consisting of the plurality of charging units 6 connected to the same central control system 10 forms a network preferably provided with optimizing means to distribute electric energy, as optimally as possible, both for charging the vehicles 5, 5a and to the regulating market of the electrical grid 2.

The arrangement according to the invention includes a data connection 20 conveying data traffic from the vehicles, such as buses or trucks repetitively traveling along the substantially same predetermined route, to the central control system 10. The data traffic over the data connection 20 moves in both directions and carries, among other things, data about the amount and consumption of energy of the batteries of the vehicles 5. The data also contain the future need of energy of the batteries of the vehicles 5, for a predetermined period of time, such as the next two hours.

The data connections 21 of the other electric vehicles 5a to the central control system are also bidirectional, and the data may contain, among other things, a reservation for a charging point of a given charging unit 6; an estimated time of arrival at said charging point, based on information obtained from a navigator on the vehicle 5a, for example; required charging energy; charging power for the vehicle; etc.

The data traffic over the data connection 21 between the charging units 6 and the central control system 10 also moves in both directions and comprises, among other things, data about the charging situation of the battery pack 7 of the charging unit 6; data about the amount of energy stored in the battery pack 7 and about the power to be supplied to/from the electrical grid 2, and historical estimate data about how much charging energy will needed for the vehicles during the next hours.

There is a data connection 23 also between the grid operators and the central control system, the data traffic thereon moving in both directions. The grid operators provide control data received from the electricity market, for example. An operator of the electrical grid 2 not only signals the other operators of the electric energy regulating market to take regulatory measures but said operator can also produce prognoses on the need of regulating power and on the price of electricity, such as on a minute level, on an hour level etc. Examples of said regulatory measures may include up-regulation, down-regulation, need of power, duration etc.

Weather data are often separately provided to the electricity market and the grid operators but it can be contemplated that institutions processing and communicating weather data have a data traffic carrying data connection 24 to the central control system 10 according to the invention. These data may include data about wind and sunshine, for example.

Preferably, bus operators and local traffic organizations, as well as other relevant bodies, are also connected to the arrangement according to the invention. In this case, the data traffic carrying data connection 25 to the central control system 10 contains the itinerary and timetable of each vehicle 5, such as a bus, operating on a standard route. Based on these data, an estimate on how much charging energy will be needed for the vehicles 5, during a desired period of time, such as the next two hours, is worked out for each charging unit 6. This estimate can be accurate up to the minute. Said period can also be shorter or longer. It can cover an hour, a day, a week or the next week etc.

The central control system 10, which can be referred to as "the back end", can be adapted to operate in such a way that, when said above-described data are available, the central control system 10 can control the battery packs 7 of the charging units 6 to increase or decrease the energy amount of the batteries. The arrangement also takes into account any agreements with the electricity market, i.e. the lowest amount of up- and down-regulation capacity agreed on with the regulating market. This allows for electricity acquisition plans; electricity is acquired for the needs of electric buses when its price is at the lowest. Then, information on the charging situation of the battery packs 7, i.e. on the amount of up- and down-regulation energy, is made available to the electricity market.

In a situation where up- or down-regulation is needed, a national grid operator, for example, can control a single battery pack 7 either directly or inform the central control system 10 of the need, the central control system 10 then controlling each of the battery packs 7 under its control to operate according to the need of regulation, i.e. to either charge the batteries from the electrical grid 2 or to discharge to the electrical grid 2. The battery packs 7 can be placed in different charging units 6. However, as the need of regulation changes continuously, the regulating power of the individual battery packs 7 must be adjusted accordingly. When the capacity available in the battery pack 7 of a charging unit 6 is running out, the power of another charging unit 6 must be increased, and so on. It is also possible to decrease the regulating power of an individual battery pack 7 while vehicles 5, 5a are being charged at the charging station of this charging unit 6.

By charging the battery packs 7 of the charging units 6 from the electrical grid 2 and by discharging to the electrical grid at the right time, the electrical grid 2 can be made more stable. To achieve this, the needs of the electrical grid 2 must be detected and reacted on. It is exactly for this reason that the arrangement according to the invention has the separate central control system 10 communicating with the charging units 6, electrical grid operators and administrators as well as other operators with vehicles 5 whose batteries are charged from the charging unit 6.

In the arrangement, the bus operators, and the buses as well, communicate with the charging unit 6 through the central control system 10. The bus operator can inform each charging unit 6 of the daily number of buses 5 arriving at the charging unit 6 and of the amount of energy needed for them. This allows the central control system 10 to know how much charging energy is needed each day. This charging energy information can be submitted to the operator or administrator of the electrical grid, allowing the central control system 10 to agree on a suitable amount of charging power, with a high precision, such as minute by minute, with them.

Preferably, the central control system 10 also communicates with renewable energy producers. In this case, the information communicated to them can be windmill prognoses data produced by wind turbine operators, for example.

Preferably, the central control system 10 of the arrangement contains information, among other things, about bus timetables; buses approaching each charging unit 6; a need of regulation of the electrical grid 2, such as a need of frequency regulation or power regulation; the charging state of the batteries of the battery pack 7 as well as, in an arrangement connected to the secondary side of the transformer 1, the amount of other load on the secondary side, load history and possible prognoses. This information allows an individual charging unit 6, at all times, to optimize the power that it takes from the electrical grid 2 and/or the power that it supplies thereto.

The charging units 6 of the arrangement according to the invention can also participate, through the central control system 10, in the frequency regulation market, to even out the consumption and production variations of the electrical grid. Thus, the arrangement can be utilized as an actor supporting the electrical grid 2.

The charging unit 6 according to the invention can be constructed in an old sea container, possibly landscaped on the outside, for example. This makes it easy to move the charging unit 6 to a desired location.

Preferably, the battery packs 7 of the charging units 6 are charged during low consumption, such as in the nighttime, and, for the rest of time, preferably whenever it is advantageous for the whole. As a result, the charging units 6 are fully prepared for the charging operations of the day. In addition, overloading situations in the electrical grid are avoided.

In the arrangement according to the invention, the charging units 6 are provided with battery packs 7 dimensioned in such a way that merely the energy capacity of the battery pack 7 is oversized with respect to the charging need of the batteries of the vehicles.

It will be appreciated by a person skilled in the art that the different embodiments of the invention are not solely restricted to the examples given above but may vary within the scope of the accompanying claims.

It will also be appreciated by the person skilled in the art that the charging units 6 do have to be placed in a single location, city or residential community. Charging units 6 placed in different locations, even in different countries, can be connected to the same central control system. Besides, a vast network may include several auxiliary control systems assisting a primary central control system, all of them being interconnected and jointly optimizing the production and consumption of electrical energy of the operators of the network.

The arrangement according to the invention also makes it possible to charge the batteries of the battery packs of the charging units with electrical energy from the batteries of the vehicles. This allows electrical energy obtained from a number of separate vehicle batteries to be supplied to the grid exactly as required by the grid operator, or, in case of malfunction of the electrical grid, electrical energy to be transferred from one vehicle to another, through the battery pack of the charging unit.

If an electrical grid is charged with electrical energy directly from the batteries of vehicles, it is more difficult to regulate the power, for example. This requires each vehicle's own charging apparatus to have information about the needed amount of power and energy, as well as accurate frequency control, to allow the electrical energy to be supplied, at the right frequency, towards the grid. When the electrical energy supplied to the grid passes through the battery pack of the charging arrangement according to the invention, this required feature is already there, and it is easy to supply the energy charged from the battery of the vehicle to the batteries of the battery packs of the charging units of this charging arrangement.

## Claims

1. An arrangement for charging the batteries of electrically driven vehicles (5, 5a), the arrangement including one or more charging units (6) connected to an electrical grid (2), the charging unit (6) comprising one or more chargers (4) to which the vehicle (5, 5a) to be charged can be connected to charge the batteries of the vehicle (5, 5a), the charging unit (6) comprising a battery pack (7) placed between the electrical grid (2) and the chargers (4), **characterized in that** the energy capacity of the battery pack (7) is at least double the amount of energy needed to charge the batteries of the vehicles (5, 5a) simultaneously charged at the charging unit (6).

2. An arrangement as defined in claim 1, **characterized in that** the P/E ratio (Power-to-Energy-ratio) of the battery system (7) of the charging unit (6) is lower than 5, suitably lower than 3.

3. An arrangement as defined in claim 1 or 2, **characterized in that** the P/E ratio of the battery system (7) of the charging unit (6) is lower than 2, approximately 1.5 or even lower than 1.5.

4. An arrangement as defined in claim 1, 2 or 3, **characterized in that** the energy capacity of the battery pack (7) is reserved both for charging the batteries of the vehicles (5, 5a) and for frequency and power regulation of the electrical grid (2).

5. An arrangement as defined in any of the preceding claims, **characterized in that** the battery pack (7) is a single unitary entity, and, **in that** an electronic unit (8) is provided between the battery pack (7) and the chargers (4) to transform the electric energy obtained from the battery pack (7) into a form required for charging the batteries of the vehicles (5, 5a).

6. An arrangement as defined in any of the preceding claims, **characterized in that** the energy capacity of the battery pack (7) is at least three times higher, more suitably at least approximately four times higher and preferably at least approximately five times higher than the energy needed for charging the batteries of the vehicles (5, 5a) simultaneously coupled to the chargers (4) of the charging unit (6).

7. An arrangement as defined in any of the preceding claims, **characterized in that** a larger portion of the energy capacity of the battery pack (7) is reserved for the regulating power of the electrical grid (2) than for charging the batteries of the vehicles (5, 5a).

8. An arrangement as defined in any of the preceding claims, **characterized in that** 4/5 and 1/5 of the energy capacity of the battery pack (7) are reserved for the regulating power of the electrical grid (2) and for charging the batteries of the vehicles (5, 5a), respectively.

9. An arrangement as defined in any of the preceding claims, **characterized in that** 2/5, 2/5 and 1/5 of the energy capacity of the battery pack (7) are reserved for down-regulation of the electrical grid (2), for up-regulation of electrical grid (2) and for charging the batteries of the vehicles (5, 5a), respectively.

10. An arrangement as defined in any of the preceding claims, **characterized in that** the charging unit (6) comprises an electronic unit (11) electrically connected to the battery pack (7) to supply reserve power from the battery pack (7) to an external operator.

11. An arrangement as defined in any of the preceding claims, **characterized in that** the arrangement comprises a central control system (10) and, in each charging unit (6), a control unit (9) having a control system and connected to the central control system (10).

12. An arrangement as defined in claim 11, **characterized in that** the central control system (10) is adapted to control one or more charging units (6).

13. An arrangement as defined in claim 11 or 12, **characterized in that** the central control system (10) also is connected, at least, to the grid operator of the electrical grid (2) and to operators whose vehicles (5, 5a) charge their batteries from the charging units (6).

14. An arrangement as defined in any of the preceding claims, **characterized in that** the arrangement comprises means for dynamically optimizing the collective use of the charging units (6), based on data transmitted to the central control system (10) by different operators forming part of the same network as the charging units (6).

15. An arrangement as defined in any of the preceding claims, **characterized in that** the central control system (10) is connected in real time to one or more of the following: the vehicles (5, 5a) using the charging units, local traffic organizations, weather stations.
